# EUROPEAN PATENT SPECIFICATION

(11) **EP 0 682 806 B1**
(45) Date of publication and mention of the grant of the patent: **10.03.1999**
(21) Application number: 95900853.3
(22) Date of filing: 15.11.1994
(51) Int. Cl.: G21F 9/28, B09C 1/02

(54) **PROCESS FOR THE TREATMENT OF PARTICULATE MATERIAL**
VERFAHREN ZUR BEHANDLUNG VON TEILCHENMATERIAL
PROCEDE DE TRAITEMENT DE MATIERE EN PARTICULES

(30) Priority: 30.11.1993 GB 9324522; 30.11.1993 GB 9324521; 30.11.1993 GB 9324525
(43) Date of publication of application: 22.11.1995
(73) Proprietor: British Nuclear Fuels PLC, Risley Warrington Cheshire, WA3 6AS (GB)
(72) Inventor: BRIERLEY, Kenneth, Walter, Warrington, Cheshire WA3 6AS (GB); ELLISON, Michael, Robert, Warrington, Cheshire WA3 6AS (GB)
(86) International application number: GB9402511
(87) International publication number: WO9515566

(56) References cited:
- EP-A- 0 460 828
- EP-A- 0 533 494
- GB-A- 2 229 312
- US-A- 5 156 686

## Description

The present invention relates to a process for the treatment of particulate material, in particular a process to remove contaminants from the material by leaching.

Soil washing to remove contaminants is an established practice in several countries. The process employed in soil washing industrial plants is generally wet classification of the soil into a number of particle size fractions, allowing isolation of the more heavily contaminated fractions (generally the clay/silt fraction) from the less contaminated fraction (generally the sand/gravel fraction). The contaminated fraction can then be further treated or disposed of in a suitable facility and the clean fraction(s) can be put to beneficial use. This process suffers from two fundamental drawbacks as follows.

Soils containing high proportions of clay/silt cannot usually be economically treated because of the high proportion of secondary waste which would be produced. Soils containing a sand/gravel fraction with contamination which is resistant to wet scrubbing may not be treatable.

These drawbacks can be overcome using leaching processes, where the contaminants are taken into solution, allowing beneficial re-use of the whole soil. Leaching may be carried out in countercurrent systems where the leachant flows in the opposite direction to a feedstock of the material being leached. Such systems may comprise either one continuous stage or a number of discrete stages each comprising a solid/liquid contact and a solid/liquid separation. The use of such countercurrent systems brings difficulties where the feedstock contains substances of different kinds, for example soil containing as contaminants both radionuclides and hazardous organic substances.

According to the present invention there is provided a process for the removal of contaminants from particulate material including feeding a feedstock of the particulate material through a series of treatment stages in which it is contacted with a washing liquid and then separated from the washing liquid, washing liquid removed from at least one of the stages being passed to the stage previously encountered by the feedstock whereby the feedstock and washing liquid are passed in opposite senses or countercurrent fashion with respect to adjacent stages, and wherein the said treatment stages include a first extractant treatment stage in which a first extractant solution is employed to dissolve contaminants of a first kind and a second extractant treatment stage in which a second extractant treatment solution is employed to dissolve contaminants of a second kind.

The use of different extractant solutions in the said first and second stages allows sequential extraction of contaminants of different types thereby facilitating their separate treatment whilst minimising the volume of liquid employed in the process by using the countercurrent method.

The said particulate material may comprise soil, rock particles, dredgings, sediments, sludges, and process residues. The contaminants may be contained in the surface of the particulate material or bound inside the particles thereof.

The said contaminants of the first kind may comprise organic contaminants such as halogenated solvents, petroleum hydrocarbons and polyaromatic hydrocarbons.

The said contaminants of the second kind may include:
(i) actinides or their radioactive decay products or compounds thereof;
(ii) fission products;
(iii) heavy metals or compounds thereof.

Actinides are elements having periodic numbers in the inclusive range 89 to 104.

The term 'fission product' as used herein refers to those elements formed as direct products (or so-called 'fission fragments') in the fission of nuclear fuel and products formed from such direct products by beta decay. Fission products include elements in the range from selenium to cerium including elements such as ₅₆Ba, ₄₀Zr and ₅₂Te ₅₅Cs and ₅₈Ce.

Heavy metals desired to be separated by the process of the present invention include toxic metals such as chromium, lead, cadmium and mercury which are commonly found as earth contaminants near industrial plants and on waste disposal sites and in aquatic sediments employing chemicals containing those elements.

The contaminants separated in the second stage of the process of the present invention may include a mixture of radioactive and metallic contaminants. Alternatively, a third extractant treatment stage may be employed in order to extract metallic and radioactive contaminants in separate stages or selected contaminants in different stages, viz the second and third stages.

The washing liquid may comprise water optionally with one or more inorganic additives, eg pH adjusters, to avoid precipitation, or one or more organic additives, eg polyelectrolyte.

The first extractant may comprise a first aqueous solution and/or an organic solvent and the second extractant may comprise a second aqueous solution. Extractant leaving the first stage and containing contaminants of the first kind dissolved therein may be passed to a separator in which the dissolved contaminants are extracted. The clean extractant solution may thereafter be recirculated to the first stage.

Likewise, extractant leaving the second extractant treatment stage having contaminants of the second kind dissolved therein may be passed to a separator in which the dissolved contaminants are extracted. The extractant solution may thereafter be recirculated to the second extractant treatment stage.

In the process according to the present invention the feedstock of particulate material may be passed sequentially through the first extractant treatment stage, a first water washing stage, the second extractant treatment stage and a second water washing stage. Water (together with any optional additive(s)) extracted from the first water washing stage may be passed in countercurrent fashion to the first extractant treatment stage. Similarly, water extracted from the second water washing stage may be passed in countercurrent fashion to the second extractant treatment stage.

In this way, where the first extractant is applied to remove organic contaminants and the second extractant is applied to remove metal and/or radioactive contaminants, the first water washing stage frees the particulate material of entrained organic contaminants and remains of first extractant which might adversely affect the performance of the second extractant, eg by coating the feedstock particles and preventing the second extracting contacting the particles. The second water washing stage frees the particles of the feedstock from remains of the second extractant and dissolved contaminants.

Any one or more of the said stages may itself include a plurality of sub-stages each including a contactor for contacting the feedstock with washing liquid from the next sub-stage which the feedstock is to encounter and a separator for separating the washed feedstock from the washing liquid.

The process according to the present invention may include a pre-treatment step before the said treatment stages. The pre-treatment step may comprise one or more of screening, crushing and scrubbing to form particles of the correct size in the feedstock material.

In the process according to the present invention where the first extractant is applied to extract organic contaminants the extractant may comprise a surfactant, eg sodium dedocylsulphate, an organic solvent eg aliphatic alcohols or a proprietary chemical.

In the process according to the present invention where the second extractant is applied to extract heavy metals *and/or* radioactive contaminants (actinides, decay products or compounds thereof or fission products) the extractant may comprise Solution X as follows.

Solution X comprises an aqueous solution which is free of heavy metal ions (prior to use thereof) and comprises ingredients which are naturally degradable to non-toxic products with or without mild physical assistance such as heat or ultra-violet radiation, said solution comprising:
(a) carbonated water;
(b) a conditioning agent;
and
(c) a complexing agent which comprises the anion of a single or multiple carboxylic acid species having from 2 to 6 carbon atoms in the or each such carboxylic acid species.

In Solution X described above the carbonated water may comprise CO₃⁻⁻ or HCO₃⁻ ions in aqueous solution.

The pH of the said aqueous solution comprising Solution X may be in the range 5 to 13, especially 5 to 9, and may be controlled using a carbonate such as sodium carbonate to provide the carbonated solution and/or use of another alkaline ingredient, eg sodium hydroxide.

Desirably, the said process is one which may be carried out a temperature of less than 35°C and which gives no toxic or explosive off gases.

Desirably, the said solution contains no ingredients, eg nitrates or sulphates, which will damage building materials, eg concrete, in which the material to be treated might be contained or promote a runaway reaction with uncorroded metals, eg any magnesium present.

The actinide(s), fission product(s), heavy metals and compounds thereof may dissolve in the aqueous medium as a carbonate compound as well as in the form of a complex.

The complexing agent of Solution X may be selected from the anion of a carboxylic acid in the group consisting of citric acid, acetic acid, oxalic acid and EDTA (ethylenediamine tetracetic acid).

The conditioning agent may comprise an oxidising agent such as hydrogen peroxide, ozone, oxygen-enriched air or potassium permanganate, or a reducing agent such as hydrazine or hydroxylamine. Hydrogen peroxide is preferred.

Desirably, the complexing agent is present in the said solution in a concentration in the range from 0.0001 to 5 Mol dm⁻³, especially 0.0005 to 0.1 Mol dm⁻³.

Desirably, the said conditioning agent is present in the said solution in a concentration in the range from 0.01 Molar to 3 Molar.

It is believed that the conditioning agent changes the oxidation state of the contaminant metal to a state which renders the metal soluble by forming a complex with the complexing agent and/or by the natural solubility of the conditioned cation in the leaching solution. The complex produced by the complexing agent and the metal may facilitate the oxidation or reduction carried out by the conditioning agent.

For example, it is thought that citrate ions and insoluble plutonium form a soluble plutonium complex, and that the presence of citrate ions facilitates the oxidation of the plutonium by the conditioning agent, eg hydrogen peroxide, to a more soluble oxidation state, such as plutonium (IV).

Each washing stage (or each sub-stage within such stage) may comprise a stirred tank as a liquid/solid contactor and a hydrocyclone or filter as a liquid/solid separator.

Desirably, the feedstock movement is effected by one or more pumps which may be located in one or more of the washing stages or sub-stages.

Organic material in the first extractant may be treated in a known way in the extractant, eg by biotreatment or oxidation, or separated from the extractant and treated separately, eg decomposed by incineration or recovered (if useful) eg by distillation, or immobilised, eg by sorption.

Metallic or radioactive contaminants may be removed from the second extractant in the second extractant separator by a known method, eg precipitation.

By treating organic contaminants separately from metallic and radioactive contaminants in the process of the present invention instead of using a single leaching stage in which contaminant removal is combined as in the prior art more efficient overall contaminant removal is unexpectedly effected. Particles may be treated with a first extractant to remove organic contaminants and then washed so that the extractant does not affect efficiency of treatment by the second extractant to remove metallic and radioactive contaminants. This also allows separate treatment/disposal of extracted contaminants which makes leachate treatment easier and avoids generation of mixed hazardous wastes (radioactive and non-radioactive but toxic).

If the second extractant itself contains an organic component, as in the case of Solution X, this component can be extracted by the first extractant if the first and second extractants are combined as in the prior art. Such extraction itself reduces the efficiency of the second extractant.

Published GB 2229312A by the present Applicants describes an aqueous medium comprising Solution X which was designed for the purpose of dissolving, to enable separation of, actinides contained in so-called Magnox sludge resulting from the long-term storage underwater of irradiated nuclear fuel encased in containers made of Magnox, a magnesium alloy.

EP 0533494A also by the present Applicants describes the use of compositions of Solution X for use in the decontamination of soil and other particulate materials. In the examples of Solution X which have been developed and used hitherto the cations used have comprised sodium, eg introduced as one or more of sodium carbonate or bicarbonate, sodium peroxide or sodium citrate or introduced separately e.g. as sodium hydroxide.

We have found when using Solution X prepared from sodium salts and/or sodium hydroxide to treat soil containing a high proportion of clay that the resulting slurry has poor filtration characteristics. Also, we have found that certain minerals present in soil can dissolve in the solution and can have an adverse effect on the treated soil and this may in some cases result in an undesirable increase in the amount of secondary waste produced.

Solution X as hereinbefore defined may comprise cations selected from potassium and/or calcium. Formulations of Solution X comprising cations of potassium and/or calcium will herein be referred to as "improved formulations of Solution X".

The molar concentration of the ions replacing sodium ions eg of potassium ions or calcium ions or potassium and calcium ions (where combined) is desirably not substantially less than the molar concentration of complexing agent present in the Solution X.

The molar concentration of the potassium ions and for calcium ions may be from one fifth to five times the molar concentration of the complexing agent present.

As noted above use of solutions based upon sodium ions as Solution X for soil leaching applications results in slurries having poor filtration characteristics. This is believed to be due to disruption of the clay lattice by exchange of sodium ions resulting in the formation of fine flocculated solid particles. We have found unexpectedly and beneficially that use of potassium instead of sodium improves filtration characteristics as exemplified hereinafter. This improvement is believed to be due to lesser disruption of the clay lattice by the leachant solution.

Also, we have observed when using sodium solutions to treat soil containing a high proportion of calcium, for example as chalk or limestone, that significant dissolution of the calcium can occur. We believe this to be due to the formation of soluble complexes with the complexing agent. We have found unexpectedly and beneficially that use of calcium instead of sodium in the Solution X formulation in applications where calcium soil is to be treated inhibits the leaching of calcium from the soil and that by using such deliberately introduced calcium the performance of the Solution X is not significantly impaired. The comparative extraction efficiencies of formulations of Solution X containing respectively sodium and calcium are exemplified hereinafter.

Improved formulations of Solution X may be used in all applications known for the use of Solution X. For example, such formulations may be employed as a leachate to decontaminate particulate material for example soil, rock particles, dredgings, sediments, sludges, and process residues. Where the soil or other particles contains calcium desirably the improved formulation of Solution X includes calcium ions.

For example, the said process may be a process for the treatment of material which is or is suspected to be contaminated with one or more actinides or their radioactive decay products or fission products or other heavy metals or compounds thereof, which process includes contacting the said material with a liquid medium which comprises an improved formulation of Solution X as defined hereinbefore, wherein the said process is for soil treatment for land remediation and includes the steps of removing soil from a site of contamination or suspected contamination, transporting the soil to a treatment plant and leaching the soil with the said liquid medium thereby dissolving contaminants as complexes in said liquid medium.

The said process provides a method of treating soil so that the contaminants contained in the soil are leached from the soil by dissolution in the said liquid medium comprising Solution X thereby restoring the soil to a substantially safer condition. The soil treated by the said process may be that obtained from the vicinity of a nuclear materials processing, storage or other nuclear plant or from an industrial zone or a waste disposal site in which heavy metals have contaminated the ground. It may also be from ground contaminated by application of sewage sludge or solids obtained from the dredging of silt or mud or other aquatic sediment.

A number of the major hazardous radioactive contaminants other than uranium which might be encountered include other actinides such as americium and neptunium. These elements and plutonium have a chemistry which is quite different from that of uranium. However, such contaminants can be dissolved by Solution X.

In the process according to the present invention one of the extractant treatment stages, eg the second stage may be that in which the extractant is an improved formulation of Solution X according to the present invention.

Desirably, the improved formulation of Solution X includes potassium ions where the step of separating the feedstock from washing liquid includes filtration.

An alternative process for the use of improved formulations of Solution X comprises leaching contaminants from plutonium contaminated materials (pcm) as described in Applicants' International Patent Application No. GB 93/02212.

Where radionuclides such as actinides are recovered by dissolution in improved formulations of Solution X in accordance with the present invention, such radionuclides are desirably recovered in concentrated form from the aqueous medium after separation therefrom of the washed material.

The recovery may be by one of the known methods employed for recovering actinides from solutions in which they are dissolved, such as evaporation, and/or solvent extraction and/or ion exchange, and/or floc treatment. Other processes such as reverse osmosis may be employed to purify the separated aqueous liquid medium further which, after purification, may be re-used, eg by recirculation, in the soil washing process. Individual actinides recovered in the manner described may be further separated by known selective separation techniques.

The contaminant concentrate residue obtained from the above processes after separation of actinides may be disposed of in a manner suitable for the type of contaminant involved. For example, where the contaminants include fission products the residue may be handled and disposed of by one of the methods known for the disposal of high level or intermediate level radioactive waste associated with irradiated nuclear fuel. For example, the residue may be encapsulated in glass by a known vitrification technique carried out remotely within a radiation-stable structure, eg made of concrete.

Actinide separation and residue vitrification processes are currently known processes employed by the present Applicants at their Sellafield reprocessing plants.

Where the said process is to be employed for washing of soil the objective of using the process is that after the soil washing process has taken place the soil is reduced to a safer state. Normally, it will be re-transported to a site from which it was excavated and allowed to be relaid. Care is taken not to re-contaminate the soil by contact with untreated soil. In many cases the state of the treated soil should be sufficiently safe, either immediately or after a suitable time, that it can be used in applications where the public may have access to the land of which it forms part.

Some particulate materials such as soils are often contaminated by metals which although hazardous to humans or the environment are of significant commercial value. It is desirable when treating such soils to reduce their contaminant levels so that as much as possible of the removed metals should be recycled for beneficial use rather than disposed of as a secondary waste.

The process may include the recovery of metal from particulate material contaminated with metal containing species which comprises the steps of treating the particulate material with a leachant extractant solution, comprising Solution X, or the improved formulation of Solution X, which dissolves the metal contaminants, separating the leachate containing metal from the particulate material, passing the leachate containing metal into an electrochemical cell to form an electrolyte between an anode and a cathode in the cell and passing an electric current between the anode and the cathode to cause electrodeposition of the dissolved metal in the leachate onto the cathode.

Desirably, after electrodeposition of the metal the leachate is recirculated for re-use in the particulate treating step. The leachate may if necessary be treated by one or more known processes to purify it further before re-use.

Electrodeposition is known per se and a variety of techniques are known for the removal of metals from dilute solutions as described hereinafter. However, extractant solutions such as Solution X or an improved formulation of Solution X are designed to keep heavy metals and radionuclides in solution and it is therefore surprising that these elements can be re-extracted from the solution simply and effectively by electrodeposition.

The resulting extractant solution after electrodeposition of the metals is relatively free from soil minerals, unlike the prior art processes, and unexpectedly and beneficially is therefore amenable to recycle. The extractant solution may therefore be returned to the vessel in which the particulate treatment is carried out.

The present invention beneficially facilitates the efficient recovery of useful metals from the extractant solution. An additional benefit is that metal contaminants of little or no commercial value can be recovered in a more concentrated form than is possible for other known recovery methods, eg hydroxide precipitation, employed with leaching processes, thereby reducing waste volumes for disposal.

The separation of metals by electrodeposition from the extractant solution may be supplemented by one of the other known methods employed for recovering metals from solutions in which they are dissolved, such as evaporation, and/or solvent extraction and/or ion exchange, and/or floc treatment. Other processes such as reverse osmosis may be employed to assist purification of the separated extractant solution prior to its recirculation and re-use in the soil washing process. Individual actinides recovered in the manner described may be further separated by known selective separation techniques.

The metal(s) deposited on the cathode of the electrochemical cell may be extracted in a known way suitable for the metal(s) concerned. For example the cathode may be extracted and treated with acid.

As noted above, methods and electrochemical cells for the recovery of metals from dilute solutions are known per se, eg to treat industrial effluents, and in some cases are commercially available. For example, multiple electrodes, eg steel or titanium optionally coated with noble metals may be employed. Cell geometrics may include two-dimensional arrangements of parallel plates or rotating cylindrical electrodes. Alternatively, three dimensional electrode arrangements or constructions may include porous, packed or fluidised bed electrodes. Expanded metal mesh electrodes immersed in small beads, eg of glass, can be employed, The beads provide agitation to facilitate good mass transfer. Such beads can be employed in a fluid bed. Alternatively, a hydrocyclone arrangement may be employed to facilitate mass transfer conditions.

The electrolyte in the electrodeposition step may be arranged to flow continuously through the electrolytic cell arrangement or alternatively may be allowed to enter the cell and remain in the cell for sufficient time to permit the dissolved metals to be electrodeposited. In either case, the metals need to be removed from the cell faster than the rate at which leachate containing dissolved metals introduces them which in practice means faster than the rate at which particulate material containing the metals introduces them into the apparatus in which it is to be treated by the leachant extractant solution.

Where the electrolyte remains in the cell the residence time can be set and a control system can be employed at the end of the residence time to extract spent electrolyte and introduce new electrolyte. The cell outlet may contain a known metal ion detector which senses the amount of residual metal in the solution. Where this amount is greater than a pre-determined limit, the solution may be returned to the electrolytic cell for further metal ion removal before onward discharge into the recirculation loop to the particulate material treatment apparatus.

The metal deposited on the cathode of the electrochemical cell may be extracted in a known way.

The process of treating particulate material may comprise the process according to the first aspect of the present invention.

Extractant leaving the second extractant treatment stage having contaminants of the second kind dissolved therein may be passed to a separator comprising an electrochemical cell in which the dissolved contaminants are extracted by the aforementioned electrodeposition. The extractant solution may thereafter be recirculated to the second extractant treatment stage.

Embodiments of the present invention will now be described by way of example with reference to the accompanying drawings, in which:
Figure 1 is a block schematic diagram illustrating a sequence of stages in a countercurrent leaching process embodying the invention;
Figure 2 is a schematic diagram showing one of the stages (or sub-stages) in the sequence shown in Figure 1.

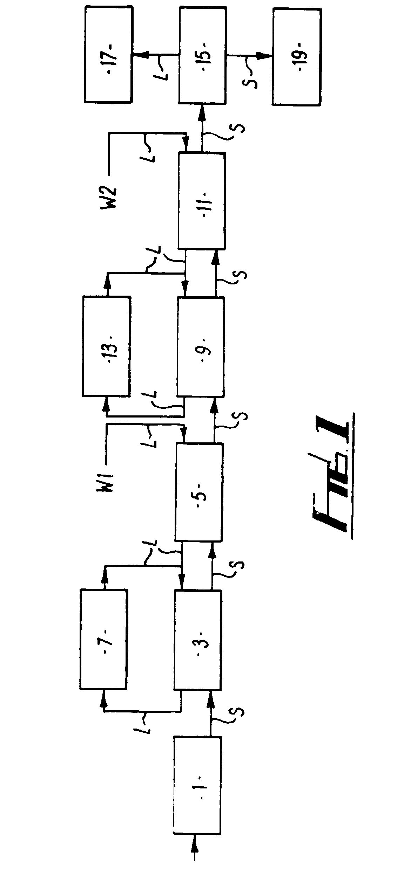

In the process illustrated in Figure 1 arrows labelled S indicate flow of solid particulate material and arrows labelled L indicate flow of cleaning liquids. Material to be treated, eg soil to be decontaminated, is given any necessary pre-treatments eg crushing, sieving, scrubbing in a preliminary step 1 (which may in practice be a series of steps), after which it is applied as feedstock material to a first extractant treatment stage 3 in which dissolved organic contaminants are removed. The feedstock material is contacted in stage 3 with an aqueous solution comprising a mixture of water obtained from the output of a first water washing stage 5 (to which the feedstock is next to be applied after the stage 3) and an extractant for organic material obtained from a separator 7.

After washing with the leachant solution in stage 3 the solid feedstock material is separated from the solution and passed on to the first water washing stage 5. Extractant solution containing dissolved contaminants is passed from the stage 3 to the separator 7 in which the dissolved contaminants are removed to enable clean extractant solution to be recirculated as input to stage 3.

In the washing stage 5, water from a water source W1 is contacted with the feedstock particulate material to wash the material, after which the water is separated from the feedstock material and applied as an input to the earlier stage 3 as mentioned above.

The feedstock material is next passed to a second extractant treatment stage 9 in which heavy metal or radioactive contaminants are removed. The feedstock material is contacted in stage 9 with an aqueous solution comprising a mixture of water obtained from the output of a second water washing stage 11 (to which the feedstock is next to be applied after the stage 9) and extractant for metals and/or radioactive contaminants obtained from a separator 13. This extractant may be Solution X or an improved formulation of Solution X containing calcium and/or potassium as described above. After washing with the extractant solution in stage 9 the solid feedstock material is separated from the solution and passed onto the second water washing stage 11. Extractant solution containing dissolved contaminants is passed from stage 9 to the separator 13, which may comprise an electrolytic cell as described above in relation to the third aspect of the present invention, in which the dissolved contaminants are removed to enable clean extractant solution to be recirculated as input to stage 9.

In the washing stage 11, water from a water source W2 is contacted with the feedstock material to further wash the material after which the water is separated from the feedstock material and applied as an input to the earlier stage 9 as mentioned above.

Finally, the output feedstock material is separated in a separator 15 into washings 17 and clean, decontaminated particulate material 19.

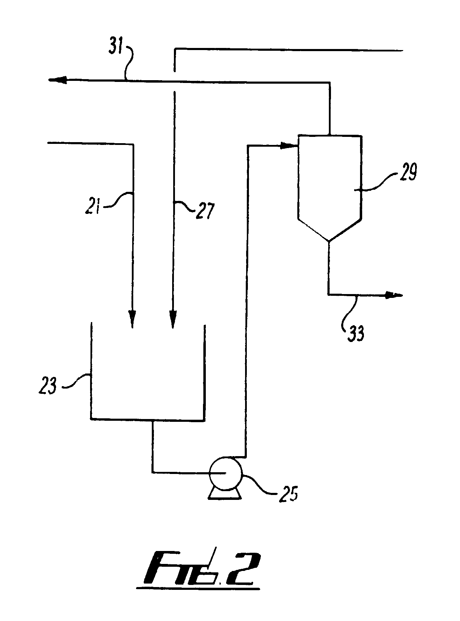

Figure 2 further illustrates one of the washing stages (eg stage 3, 5, 9 or 11) shown in Figure 1. In Figure 2, feedstock material (from the previous stage in the process) flows under gravity along a pipeline 21 into a contactor 23. In the contactor 23, which may comprise an open stirred tank, the feedstock material is thoroughly washed with water applied via a pipeline 27 from the next succeeding stage in the process (unless the stage is that at which water is first being introduced eg from the source W1). The feedstock material and washing liquid are then pumped by a pump 25 located after the contactor 23 to a separator 29, eg hydrocyclone, in which the washing liquid is removed from the solid feedstock material. The liquid is passed via a pipeline 31 to the previous stage (unless it is extractant solution which has to be passed to a separator, eg separator 7 in Figure 1) and the feedstock material is passed via a pipeline 33 to the next stage in the sequence.

Any one or more of the stages 3, 5, 9 and 11 shown in Figure 1 may itself comprise two or more sub-stages each sub-stage being an arrangement as illustrated in Figure 2.

The following example illustrates the improvement obtained by using potassium instead of sodium cations in Solution X in processes such as that described with reference to Figures 1 and 2. Firstly, successive filtrations of slurries of a given clay material formed using Solution X1 comprising carbonate, peroxide, EDTA and sodium ions were carried out, the molar concentration of EDTA and sodium being in the ratio 1:3. Next successive filtrations under the same filtration conditions of slurries of the same clay using the same clay/leachate ratio were carried out using Solution X2 comprising the same carbonate, peroxide and EDTA concentrations as in Solution X1 but with two thirds of the sodium ions replaced by potassium ions (otherwise to the same molar concentration).

The comparative results are shown in Table 1 in which it can be seen that Solution X2 gives slurry with much improved filtration properties compared to Solution X1.

**Table 1;**

| | RELATIVE FILTRATION TIME | |
|---|---|---|
| | POTASSIUM FORMULATION | SODIUM FORMULATION |
| First extraction | 1 | 2.5 |
| Second extraction | 4.5 | 100 |
| Further extractions | 4.0 | 100 |

The following further example illustrates the effect of using calcium instead of sodium cations in Solution X formulations in processes such as that described with reference to Figures 1 and 2.

Firstly, the extraction efficiency (ie percentage of contaminant removed by dissolution) for Solution X1 as aforesaid was measured for a range of heavy metal contaminants which could be present on soil. Next, the extraction efficiency for Solution X3 as follows was measured for the same contaminants in the same concentrations. Solution X3 comprises carbonate, peroxide and EDTA in the same concentrations as in Solution X1 but with sodium ions replaced by calcium ions calcium being present in a concentration equimolar with EDTA. The extraction efficiencies for Solution X3 all relative to those for solution X2 are shown in Table 2 as follows.

**Table 2:**

| Comparison of Extraction Efficiencies | |
|---|---|
| ION EXTRACTED | CALCIUM EXTRACTION EFFICIENCY (RELATIVE TO SODIUM) |
| Cr | 93% |
| Ni | 98% |
| Cu | 100% |
| Zn | 100% |
| As | 87% |
| Sr | 99% |
| Cd | 100% |
| Cs | 99% |
| Pb | 100% |
| Th | 98% |
| U | 95% |

Although the extraction efficiencies are slightly reduced in some cases (but unaffected in other cases) by using calcium instead of sodium the reduction is generally only small and this minor disadvantage is acceptable and outweighed by the important advantage described above, ie the avoidance of forming calcium complexes when using calcium containing particulate material.

The efficiency of removing metals and radionuclides from a solution comprising Solution X in concentrations found in particulate contamination situations has been successfully demonstrated experimentally. The example of Solution X employed EDTA as complexing agent H₂O₂ together with sodium carbonate solution all to a concentration of 0.1M and had the contaminant metal or radionuclide dissolved therein at concentrations of between 15 and 1100 mg/l. Firstly, 1000 mg/l of lead was dissolved in solution and lead was removed from the solution electrolytically with a current efficiency of 38 per cent even with no pH adjustment of the Solution X. The cathode potential was -1.8 volts relative to a standard calomel electrode. In a further test the same Solution X containing lead and five other metals and radionuclides as follows was electrolysed using a single applied voltage as above. An extraction efficiency similar to that with lead per se was obtained. The other metals and radionuclides and their concentrations in Solution X were as follows:

| Metal or radionuclide | Concentration mg/l |
|---|---|
| Iron | 15 |
| Copper | 500 |
| Cadmium | 50 |
| Lead | 700 |
| Thorium | 30 |
| Uranium | 40 |

## Claims

1. A process for the removal of contaminants from particulate material characterised by feeding a feedstock of the particulate material through a series of treatment stages in which it is contacted with a washing liquid and then separated from the washing liquid, washing liquid removed from at least one of the stages being passed to the stage previously encountered by the feedstock whereby the feedstock and washing liquid are passed in opposite senses or countercurrent fashion with respect to adjacent stages, and wherein the said treatment stages include a first extractant treatment stage in which a first extractant solution is employed to dissolve contaminants of a first kind and a second extractant treatment stage in which a second extractant treatment solution is employed to dissolve contaminants of a second kind.

2. A process as in Claim 1 and wherein the said particulate material comprises soil, rock particles, dredgings, sediments, sludges or process residues, the contaminants being contained in the surface of the particulate material or bound inside the particles thereof.

3. A process as in Claim 1 or Claim 2 and wherein the said contaminants of the first kind comprise organic contaminants and the said contaminants of the second kind include:
(i) actinides or their radioactive decay products or compounds thereof; or
(ii) fission products; or
(iii) heavy metals or compounds thereof.

4. A process as in Claim 3 and wherein the contaminants separated in the second stage of the process of the present invention include a mixture of radioactive contaminants and non-radioactive metallic contaminants.

5. A process as in any one of the preceding claims and including one or more further extractant treatment stages to extract contaminants of a selected type.

6. A process as in any one of the preceding claims and wherein the washing liquid comprises water optionally with one or more additives.

7. A process as in any one of the preceding claims and wherein the first extractant comprises a first aqueous solution and/or an organic solvent and the second extractant comprises a second aqueous solution.

8. A process as in any one of the preceding claims and wherein extractant leaving the first stage and containing contaminants of the first kind dissolved therein is passed to a separator in which the dissolved contaminants are extracted, the clean extractant solution thereafter being recirculated directly or via one or more purification stages to the first stage and wherein the extractant leaving the second extractant treatment stage having contaminants of the second kind dissolved therein is passed to a separator in which the dissolved contaminants are extracted, the clean extractant solution thereafter being recirculated either directly or via one or more purification stages to the second extractant treatment stage.

9. A process as in any one of the preceding claims and wherein the feedstock of particulate material is passed sequentially through the first extractant treatment stage, a first water washing stage, the second extractant treatment stage and a second water washing stage, water extracted from the first water washing stage being passed in countercurrent fashion to the first extractant treatment stage and similarly, water extracted from the second water washing stage being passed in countercurrent fashion to the second extractant treatment stage.

10. A process as in Claim 8 and wherein any one or more of the said stages itself includes a plurality of sub-stages each including a contactor for contacting the feedstock with washing liquid from the next sub-stage which the feedstock is to encounter and a separator for separating the washed feedstock from the washing liquid.

11. A process as in any one of the preceding claims and wherein the process additionally includes a pre-treatment step before the said treatment stages.

12. A process as in any one of the preceding claims and wherein in one of the said extractant treatment stages the particulate material is treated with an extractant solution for radioisotopes or for heavy metals which comprises an aqueous solution which is free of heavy metal ions (prior to use thereof) and comprises ingredients which are naturally degradable to non-toxic products with or without mild physical assistance such as heat or ultra-violet radiation, said solution comprising:
(a) carbonated water;
(b) a conditioning agent;
and
(c) a complexing agent which comprises the anion of a single or multiple carboxylic acid species having from 2 to 6 carbon atoms in the or each such carboxylic acid species.

13. A process as in Claim 12 and wherein the conditioning agent comprises an oxidising agent and wherein the solution includes cations selected from potassium and calcium ions.

14. A process as in Claim 12 or Claim 13 and wherein the solution has a pH in the inclusive range 5 to 13.

15. A process as in Claim 13 or Claim 14 and wherein the complexing agent is selected from the group comprising anions of citric acid, acetic acid, oxalic acid and EDTA.

16. A process as in any one of Claims 13 to 15 and wherein the oxidising agent is selected from peroxides, ozone, oxygen enriched air and potassium permanganate.

17. A process as in any one Claims 13 to 16 and wherein the complexing agent has a molar concentration in the inclusive range 0.0005 to 0.5 Mol dm⁻³.

18. A process as in any one of Claims 13 to 17 and wherein the oxidising agent has a concentration in the inclusive range 0.001 Molar to 3 Molar.

19. A process as in any one of Claims 13 to 18 and wherein the potassium ions and/or calcium ions are present in a molar concentration which is from one fifth to five times the molar concentration of the complexing agent.

20. A process as in any one of Claims 12 to 19 and which process includes contacting the said material with a liquid medium which comprises a solution as in any one of Claims 12 to 19, wherein the said process is employed for soil treatment for land remediation and includes the steps of removing soil from a site of contamination or suspected contamination, transporting the soil to a treatment plant and leaching the soil with the said liquid medium thereby dissolving contaminants as complexes in said liquid medium.

21. A process as in any of the preceding Claims and including the recovery of metal from particulate material contaminated with metal containing species which comprises the steps of treating the particulate material with a leachant extractant solution which dissolves the metal contaminants, separating the leachate containing metal from the particulate material, passing the leachate containing metal into an electrochemical cell to form an electrolyte between an anode and a cathode in the cell and passing an electric current between the anode and the cathode to cause electrodeposition of the dissolved metal in the leachate onto the cathode, wherein the leachate extractant solution is a solution as in any one of Claims 12 to 19.

22. A process as in Claim 21 and wherein after electrodeposition of the metal the leachate is recirculated for re-use in the particulate treating step.

23. A process as in Claim 21 or Claim 22 and wherein the leachate is treated by one or more known processes to purify it further before re-use in the particulate treating step.

## Patentansprüche

1. Verfahren zur Entfernung von Verunreinigungen aus einem teilchenförmigen Material, dadurch gekennzeichnet, daß man eine Beschickung aus dem teilchenförmigen Material durch eine Reihe von Behandlungsstufen führt, in denen sie mit einer Waschflüssigkeit in Kontakt gebracht und dann wieder davon getrennt wird, die aus mindestens einer der Stufen abgezogene Waschflüssigkeit in die zuvor von der Beschickung erreichte Stufe leitet, wodurch die Beschickung und die Waschflüssigkeit in entgegengesetzter Richtung oder gegenläufig zu den benachbarten Stufen geleitet werden, und wobei die Behandlungsstufen eine erste Extraktionsbehandlungsstufe, in der eine erste Extraktionslösung verwendet wird, um Verunreinigungen einer ersten Art zu lösen, und eine zweite Extraktionsbehandlungsstufe, in der eine zweite Extraktionsbehandlungslösung verwendet wird, um Verunreinigungen einer zweiten Art aufzulösen, umfassen.

2. Verfahren nach Anspruch 1, bei dem das teilchenförmige Material Erde, Felsteilchen, ausgebaggertes Material, Ablagerungen, Schlämme oder Verfahrensrückstände umfaßt, wobei die Verunreinigungen in der Oberfläche des teilchenförmigen Materials enthalten oder in dessen Teilchen gebunden sind.

3. Verfahren nach Anspruch 1 oder 2, bei dem die Verunreinigungen der ersten Art organische Verunreinigungen und die Verunreinigungen der zweiten Art
i) Actinoide oder ihre radioaktiven Zerfallsprodukte oder deren Verbindungen oder
ii) Spaltprodukte oder
iii) Schwermetalle oder deren Verbindungen
umfassen.

4. Verfahren nach Anspruch 3, bei dem die in der zweiten Stufe des erfindungsgemäßen Verfahrens abgetrennten Verunreinigungen ein Gemisch aus radioaktiven Verunreinigungen und nicht radioaktiven metallischen Verunreinigungen umfassen.

5. Verfahren nach einem der vorstehenden Ansprüche, das eine oder mehrere zusätzliche Extraktionsbehandlungsstufen zur Extraktion von Verunreinigungen eines ausgewählten Typs umfaßt.

6. Verfahren nach einem der vorstehenden Ansprüche, bei dem die Waschflüssigkeit Wasser ggfs. mit einem oder mehreren Additiven umfaßt.

7. Verfahren nach einem der vorstehenden Ansprüche, bei dem das erste Extraktionsmittel eine erste wäßrige Lösung und/oder ein organisches Lösungsmittel und das zweite Extraktionsmittel eine zweite wäßrige Lösung umfaßt.

8. Verfahren nach einem der vorstehenden Ansprüche, bei dem das aus der ersten Stufe austretende Extraktionsmittel, das gelöste Verunreinigungen der ersten Art enthält, zu einer Trennvorrichtung geleitet wird, in der die gelösten Verunreinigungen extrahiert werden, die saubere Extraktionsmittellösung anschließend direkt oder über eine oder mehrere Reinigungsstufen zur ersten Stufe zurückgeführt wird, und bei dem das aus der zweiten Extraktionsbehandlungsstufe austretende Extraktionsmittel, das gelöste Verunreinigungen der zweiten Art enthält, zu einer Trennvorrichtung geleitet wird, in der die gelösten Verunreinigungen extrahiert werden, und die saubere Extraktionslösung anschließend entweder direkt oder über eine oder mehrere Reinigungsstufen zur zweiten Extraktionsbehandlungsstufe zurückgeführt wird.

9. Verfahren nach einem der vorstehenden Ansprüche, bei dem die Beschickung aus teilchenförmigem Material nacheinander durch die erste Extraktionsbehandlungsstufe, eine erste Waschstufe mit Wasser, die zweite Extraktionsbehandlungsstufe und eine zweite Waschstufe mit Wasser geleitet wird, wobei aus der ersten Waschstufe mit Wasser extrahiertes Wasser gegenläufig zur ersten Extraktionsbehandlungsstufe geleitet wird und aus der zweiten Waschstufe mit Wasser extrahiertes Wasser auf ähnliche Weise gegenläufig zur zweiten Extraktionsbehandlungsstufe geleitet wird.

10. Verfahren nach Anspruch 8, bei dem eine oder mehrere der Stufen selbst eine Vielzahl von Unterstufen einschließen, die jeweils einen Kontaktor zum In-Kontakt-bringen der Beschickung mit Waschflüssigkeit aus der nächsten Unterstufe, in die die Beschickung gelangt, und eine Trennvorrichtung zur Abtrennung der gewaschenen Beschickung aus der Waschflüssigkeit umfassen.

11. Verfahren nach einem der vorstehenden Ansprüche, bei dem das Verfahren vor den Behandlungsstufen außerdem eine Vorbehandlungsstufe einschließt.

12. Verfahren nach einem der vorstehenden Ansprüche, bei dem das teilchenförmige Material in einer der Extraktionsbehandlungsstufen mit einer Extraktionslösung für radioaktive Isotope oder Schwermetalle behandelt wird, welche eine (vor ihrem Einsatz) von Schwermetallen freie wäßrige Lösung sowie Bestandteile enthält, die mit oder ohne leichte physikalische Unterstützung wie Wärme oder UV-Strahlung auf natürliche Weise zu nichttoxischen Produkten abbaubar sind, wobei diese Lösung
a) kohlensaures Wasser;
b) ein Konditionierungsmittel und
c) ein komplexbildendes Mittel, das das Anion einer einzelnen oder mehrerer Carbonsäurespezies mit 2 bis 6 Kohlenstoffatomen in der bzw. jeder dieser Kohlensäurespezies
umfaßt.

13. Verfahren nach Anspruch 12, bei dem das Konditionierungsmittel ein Oxidationsmittel enthält und die Lösung aus Kalium- und Calciumionen ausgewählte Kationen umfaßt.

14. Verfahren nach Anspruch 12 oder 13, bei dem die Lösung einen pH im Bereich von 5 bis einschließlich 13 hat.

15. Verfahren nach Anspruch 13 oder 14, bei dem das komplexbildende Mittel aus der Anionen von Citronensäure, Essigsäure, Oxalsäure und EDTA umfassenden Gruppe ausgewählt wird.

16. Verfahren nach einem der Ansprüche 13 bis 15, bei dem das Oxidationsmittel aus Peroxiden, Ozon, mit Sauerstoff angereicherter Luft und Kaliumpermanganat ausgewählt wird.

17. Verfahren nach einem der Ansprüche 13 bis 16, bei dem das komplexbildende Mittel eine Molkonzentration im Bereich von 0,0005 bis einschließlich 0,5 Mol dm⁻³ hat.

18. Verfahren nach einem der Ansprüche 13 bis 17, bei dem das Oxidationsmittel eine Konzentration im Bereich von 0,001 bis einschließlich 3 Molar hat.

19. Verfahren nach einem der Ansprüche 13 bis 18, bei dem die Kalium- und/oder Calciumionen in einer molaren Konzentration vorliegen, die ein Fünftel bis das Fünffache der molaren Konzentration des komplexbildenden Mittels beträgt.

20. Verfahren nach einem der Ansprüche 12 bis 19, bei dem das Material mit einem flüssigen Medium in Kontakt gebracht wird, das eine Lösung wie in einem der Ansprüche 12 bis 19 umfaßt, wobei das Verfahren zur Erdbehandlung bei der Entseuchung von Grundstücken eingesetzt wird und folgende Schritte aufweist: Entfernung der Erde von einer verseuchten oder mutmaßlich verseuchten Stelle, Transport der Erde zu einer Behandlungsanlage und Auslaugen der Erde mit dem flüssigen Medium, wodurch Verunreinigungen als Komplexe im flüssigen Medium aufgelöst werden.

21. Verfahren nach einem der vorstehenden Ansprüche, bei dem Metall aus mit metallhaltigen Spezies verunreinigtem teilchenförmigen Material wiedergewonnen wird und das folgende Schritte umfaßt: Behandlung des teilchenförmigen Materials mit einer auslaugenden Extraktionslösung, die die metallischen Verunreinigungen löst, Abtrennen der metallhaltigen Auswaschungslösung von dem teilchenförmigen Material, Leiten der metallhaltigen Auswaschungslösung in eine elektrochemische Zelle, um einen Elektrolyten zwischen einer Anode und einer Kathode in der Zelle zu bilden, und Leiten eines elektrischen Stroms zwischen Anode und Kathode, um die Elektroabscheidung des gelösten Metalls in der Auswaschungslösung auf die Kathode zu bewirken, wobei es sich bei der Auswaschungsextraktionslösung um eine Lösung nach einem der Ansprüche 12 bis 19 handelt.

22. Verfahren nach Anspruch 21, bei dem die Auswaschungslösung nach der Elektroabscheidung des Metalls zur Wiederverwendung in der Behandlungsstufe von teilchenförmigem Material zurückgeführt wird.

23. Verfahren nach Anspruch 21 oder 22, bei dem die Auswaschungslösung mit einem oder mehreren bekannten Verfahren behandelt wird, um sie vor der Wiederverwendung im Schritt zur Behandlung des teilchenförmigen Materials zusätzlich zu reinigen.

## Revendications

1. Procédé pour éliminer les impuretés d'une matière en particules, caractérisé en ce qu'il consiste à faire passer une charge de la matière en particules à travers une série d'étages de traitement dans lesquels elle entre en contact avec un liquide de lavage puis elle est séparée du liquide de lavage, le liquide de lavage séparé dans l'un au moins des étages étant transféré à l'étage rencontré précédemment par la charge, de sorte que cette dernière et le liquide s'écoulent dans des sens opposés ou à contre-courant par rapport aux étages adjacents, et les étages de traitement en question comprennent un premier étage de traitement par un liquide d'extraction dans lequel une première solution d'extraction est utilisée pour dissoudre des impuretés d'une première sorte et un second étage de traitement par un liquide d'extraction dans lequel une seconde solution de traitement d'extraction est utilisée pour dissoudre des impuretés d'une seconde sorte.

2. Procédé suivant la revendication 1, dans lequel la matière en particules comprend un sol, des particules de roche, des produits de dragage, des sédiments, des boues ou des résidus industriels, les impuretés étant présentes à la surface de la matière en particules ou liées intérieurement aux particules de la matière.

3. Procédé suivant la revendication 1 ou la revendication 2, dans lequel les impuretés de la première sorte comprennent des impuretés organiques et les impuretés de la seconde sorte comprennent:
(i) des actinides ou leurs produits de décroissance radioactive ou des composés de ces éléments; ou
(ii) des produits de fission; ou
(iii) des métaux lourds ou des composés de ces métaux.

4. Procédé suivant la revendication 3, dans lequel les impuretés séparées dans le second étage du procédé de la présente invention comprennent un mélange d'impuretés radioactives et d'impuretés métalliques non radioactives.

5. Procédé suivant l'une quelconque des revendications précédentes, comprenant un ou plusieurs autres étages de traitement par un liquide d'extraction pour extraire des impuretés d'un type choisi.

6. Procédé suivant l'une quelconque des revendications précédentes, dans lequel le liquide de lavage comprend de l'eau renfermant facultativement un ou plusieurs additifs.

7. Procédé suivant l'une quelconque des revendications précédentes, dans lequel le premier liquide d'extraction comprend une première solution aqueuse et/ou un solvant organique et le second liquide d'extraction comprend une seconde solution aqueuse.

8. Procédé suivant l'une quelconque des revendications précédentes, dans lequel le liquide d'extraction sortant du premier étage et contenant des impuretés de la première sorte qui y sont dissoutes est envoyé à un séparateur dans lequel les impuretés dissoutes sont extraites, la solution d'extraction propre étant ensuite recyclée directement au premier étage ou en passant par un ou plusieurs étages d'épuration et le liquide d'extraction sortant du second étage de traitement d'extraction contenant en solution des impuretés de la seconde sorte est envoyé à un séparateur dans lequel les impuretés dissoutes sont extraites, la solution d'extraction propre étant ensuite recyclée au second étage de traitement d'extraction directement ou en passant par un ou plusieurs étages d'épuration.

9. Procédé suivant l'une quelconque des revendications précédentes, dans lequel la charge de matière en particules est amenée à passer successivement par le premier étage de traitement par un liquide d'extraction, un premier étage de lavage à l'eau, le second étage de traitement par un liquide d'extraction et un second étage de lavage à l'eau, l'eau extraite du premier étage de lavage à l'eau est envoyée à contre-courant au premier étage de traitement par le liquide d'extraction et, de même, l'eau extraite du second étage de lavage à l'eau est envoyée à contre-courant au second étage de traitement par le liquide d'extraction.

10. Procédé suivant la revendication 8, dans lequel un ou plusieurs des étages eux-mêmes comprennent une pluralité d'étages secondaires comportant chacun un dispositif servant à la mise en contact de la charge avec du liquide de lavage venant de l'étage secondaire subséquent que la charge doit rencontrer et un séparateur servant à séparer la charge lavée du liquide de lavage.

11. Procédé suivant l'une quelconque des revendications précédentes, qui comprend en outre une étape de prétraitement précédant les étages de traitement.

12. Procédé suivant l'une quelconque des revendications précédentes, dans lequel la matière en particules est traitée, dans l'un des étages de traitement par un liquide d'extraction, avec une solution d'extraction pour des radioisotopes ou pour des métaux lourds, qui comprend une solution aqueuse exempte d'ions de métaux lourds (avant son utilisation) et qui comprend des ingrédients qui sont dégradables naturellement en produits non toxiques avec ou sans assistance physique modérée telle que la chaleur ou des rayons ultraviolets, cette solution comprenant:
(a) de l'eau carbonatée;
(b) un agent de conditionnement; et
(c) un agent complexant qui comprend l'anion d'une entité acide carboxylique simple ou multiple avec 2 à 6 atomes de carbone dans l'entité ou chacune de ces entités acides carboxyliques.

13. Procédé suivant la revendication 12, dans lequel l'agent de conditionnement comprend un agent oxydant et la solution contient des cations choisis entre des ions potassium et calcium.

14. Procédé suivant la revendication 12 ou la revendication 13, dans lequel la solution a un pH compris dans la plage de 5 à 13.

15. Procédé suivant la revendication 13 ou la revendication 14, dans lequel l'agent complexant est choisi dans le groupe comprenant des anions d'acide citrique, d'acide acétique, d'acide oxalique et d'EDTA.

16. Procédé suivant l'une quelconque des revendications 13 à 15, dans lequel l'agent oxydant est choisi entre des peroxydes, l'ozone, de l'air enrichi en oxygène et le permanganate de potassium.

17. Procédé suivant l'une quelconque des revendications 13 à 16, dans lequel l'agent complexant a une concentration molaire dans la plage de 0,0005 à 0,5 mole.dm⁻³.

18. Procédé suivant l'une quelconque des revendications 13 à 17, dans lequel l'agent oxydant a une concentration molaire comprise dans la plage de 0,001 M à 3 M.

19. Procédé suivant l'une quelconque des revendications 13 à 18, dans lequel les ions potassium et/ou les ions calcium sont présents à une concentration molaire qui va du cinquième au quintuple de la concentration molaire de l'agent complexant.

20. Procédé suivant l'une quelconque des revendications 12 à 19, qui comprend la mise en contact de la matière en question avec un milieu liquide qui consiste en une solution suivant l'une quelconque des revendications 12 à 19, ce procédé étant utilisé pour le traitement d'un sol en vue de son assainissement et comprenant les étapes d'enlèvement du sol d'un site de contamination ou de contamination suspectée, transport du sol vers une installation de traitement et lixiviation du sol avec le milieu liquide en question de manière à dissoudre les impuretés sous forme de complexes dans le milieu liquide indiqué.

21. Procédé suivant l'une quelconque des revendications précédentes, comprenant la récupération de métal d'une matière en particules contaminée par des entités contenant ce métal, qui comprend les étapes de traitement de la matière en particules avec une solution d'extraction par lixiviation qui dissout les impuretés métalliques, séparation du produit lixivié contenant le métal de la matière en particules, transfert du milieu lixivié dans une cellule électrochimique pour former un électrolyte entre une anode et une cathode dans la cellule et passage d'un courant électrique entre l'anode et la cathode pour causer l'électrodéposition sur la cathode du métal dissous contenu dans le produit de lixiviation, la solution d'extraction par lixiviation étant une solution suivant l'une quelconque des revendications 12 à 19.

22. Procédé suivant la revendication 21, dans lequel après l'électrodéposition du métal, le produit de lixiviation est recyclé en vue de sa réutilisation dans l'étape de traitement des particules.

23. Procédé suivant la revendication 21 ou la revendication 22, dans lequel le produit de lixiviation est traité par une ou plusieurs opérations connues pour épurer davantage ce produit avant sa réutilisation dans l'étape de traitement des particules.
